# EUROPEAN PATENT SPECIFICATION

(11) **EP 2 124 534 B1**
(45) Date of publication and mention of the grant of the patent: **17.11.2010**
(21) Application number: 08751505.2
(22) Date of filing: 12.03.2008
(51) Int. Cl.: A01K 61/00

(54) **PLANT FOR PENEID SHRIMPS PRODUCTION**
ANLAGE ZUR HERSTELLUNG VON PENEIDEN GARNELEN
INSTALLATION POUR LA PRODUCTION DE CREVETTES PÉNÉIDES

(30) Priority: 21.03.2007 IT BA20070026
(43) Date of publication of application: 02.12.2009
(73) Proprietor: TCT S.R.L., 72100 Brindisi (IT)
(72) Inventor: DE RINALDIS SAPONARO, Corrado, I-72100 Brindisi (IT)
(74) Representative: Bruni, Giovanni
(86) International application number: PCT/IT2008/000166
(87) International publication number: WO 2008/114300

(56) References cited:
- US-A- 3 473 509
- US-A- 5 839 391
- US-A1- 2003 070 624
- US-A1- 2003 094 141

## Description

The present invention relates to a plant for intensive production of peneid shrimps or any other aquatic species, made up of a closed circuit prefabricated structure made of lightweight reinforced concrete and a hardware and software system which allows detailed and automatic control of all the parameters influencing the process, such as temperature, dissolved oxygen, and concentration of organic and inorganic matter in the rearing waters.

Italy imports a large numbers of crustaceans in terms of commercial value, with particular reference to shrimps, due to the high average per-unit price.

Several factors limit the growth and expansion of shrimps culture at international level: development of allochthonous pandemics, and occurrence of serious problems of *"inbreeding",* that is the mating between species of the same type, represented a strong deterrent against the increase in these practices.

However, on the other hand, the conventional extensive or semi-extensive rearing systems are typically managed on high volumes and/or with high water exchange rates, leading to effects which are not always positive for the reared species such as, for example, shrimps.

Another binding factor for this kind of rearing is represented by the requirement that the latter be located on the shoreline (for obvious water inflow and outflow reasons), were the authorisations to perform the activity impose a series of constrictions which, in combination with the high costs of the land, do not facilitate the activity.

Another binding factor is represented by the thermal parameter, which is subject to considerable excursions across seasons in various countries, among which Italy, even below the survival range of many species of shrimps. It shall be apparent that this results in the reduction of the rearing period and, therefore, the productivity of the plant.

Furthermore, the current increase in the productions, while keeping the rearing volumes constant, has been made possible by the increase in the rearing density by employing advanced technologies. However, this intensification of the productions caused a deterioration in the culture environmental quality, which involved the main chemical/physical parameters (first and foremost, dissolved oxygen and concentration of toxic nitrogen-based chemicals), and led to the development of diseases, due to the rearing stress, which are associated to high production drops. The modem marine aquaculture highlighted the need to supply pure oxygen for rearing densities above 4 kg/m³. Therefore, crucial point for the intensive rears is the in-tank control of oxygen and the other chemical/physical parameters. For the proper growth of the reared species, a good oxygen content is crucial.

The above-mentioned data collection, and the bibliographical research were substantially obtained from the following sources:
■ Scientific j oumals (Elsevier, Blackwell, Kluwer);
■ Bibliographic archives and research on Internet ;
■ Benchmarking among companies in the fishing industry;
■ WEB Newsgroups (Crust-L and Shrimpgroup).

The main object of the present invention is to solve said problems and drawbacks, by developing a closed circuit prefabricated production plant for peneid shrimps or any other aquatic species, which is automatically controlled by a high-tech system and characterized by highly innovative elements, by means of which high rearing densities can be obtained at low costs.

The closed circuit system will allow in-depth biological knowledge on peneid shrimp rearing under hyper-intensive culture conditions, by establishing the maximum density limits which the animals can tolerate, and creating a product with defined productive standards.

The closed circuit prefabricated plant offers higher productive efficiencies compared to the conventional intensive rearing systems with high water exchange rates which are built on the shoreline, in that:
■ it operates all year round, independently from the thermal excursion of the external environmental conditions;
■ it has a lower environmental impact on the territory in which it operates.

The hardware/software control system, which the system is provided with, allows constant monitoring of parameters such as water dissolved oxygen, water temperature and pH, concentration of organic matter dissolved in water, also allowing image acquisition and analysis, so as to intervene in real time on possible changes of the ideal rearing conditions, on the basis of the product density in the tank.

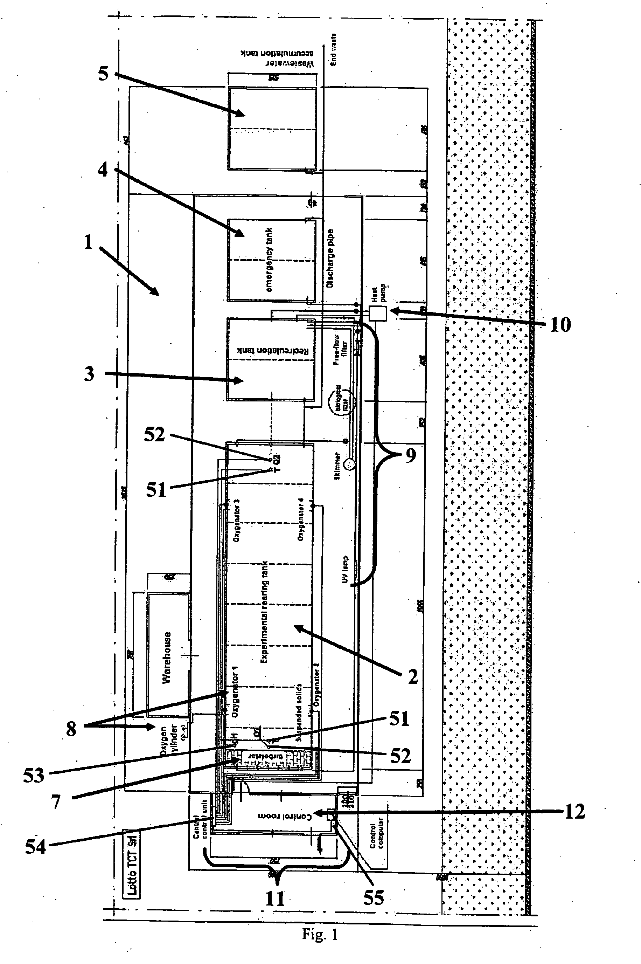

The stated objects are achieved by a rearing plant (1) implemented according to the diagram illustrated in Fig. 1. The plant is composed of the following elements or systems:
■ a series of tanks and, particularly, the rearing tank (2), where the shrimps to be reared are placed; the recirculation tank (3), which is directly connected to the rearing tank (2), from where the water to be filtered is drawn, avoiding creating turbulences inside the rearing tank (2); the emergency tank (4); the wastewater collection tank (5), to which all the wastes produced by the system are conveyed through the various filtering systems.

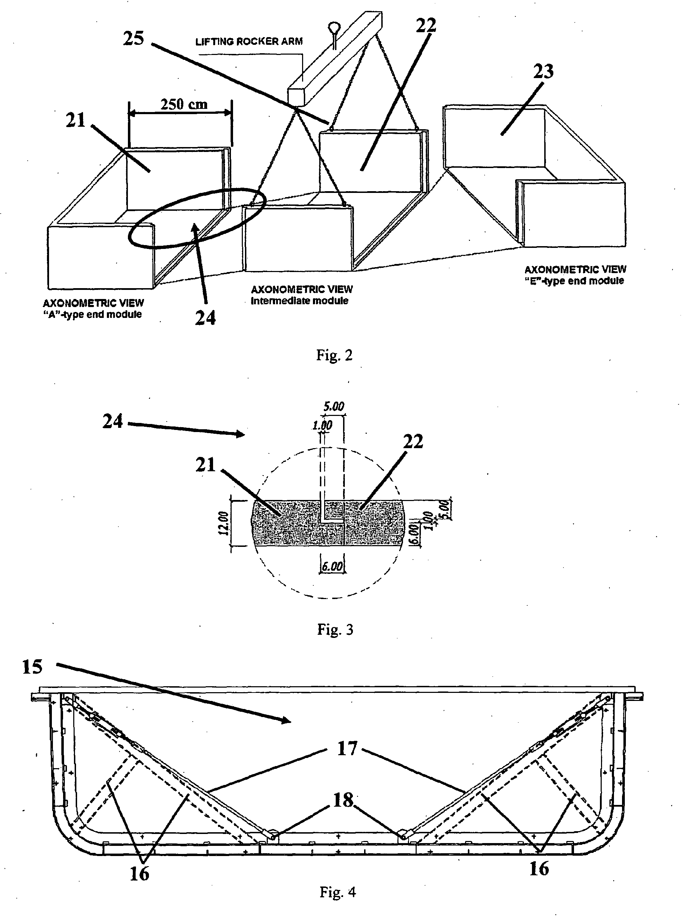

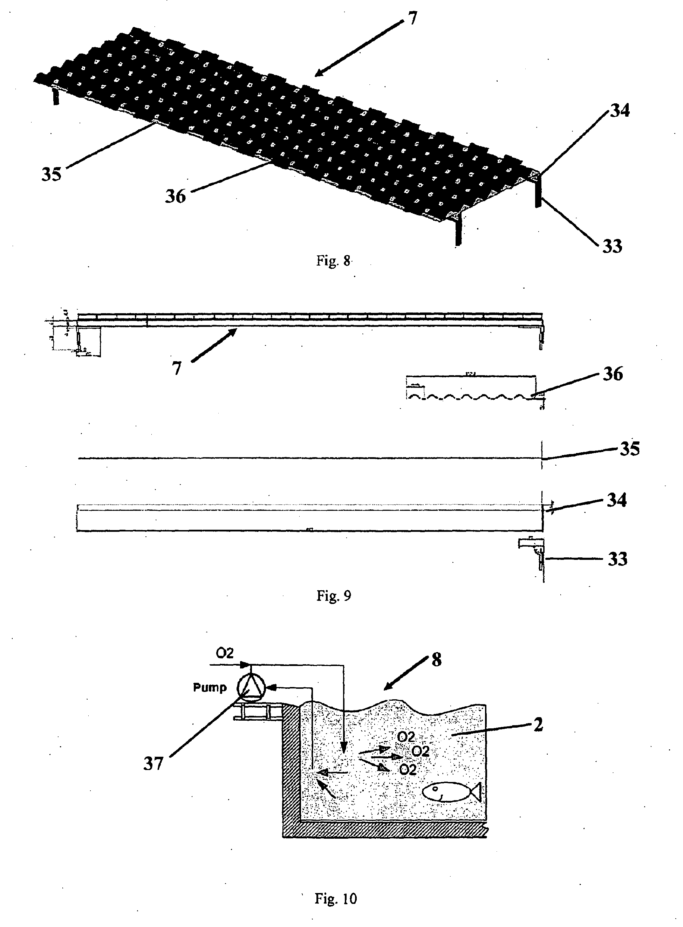

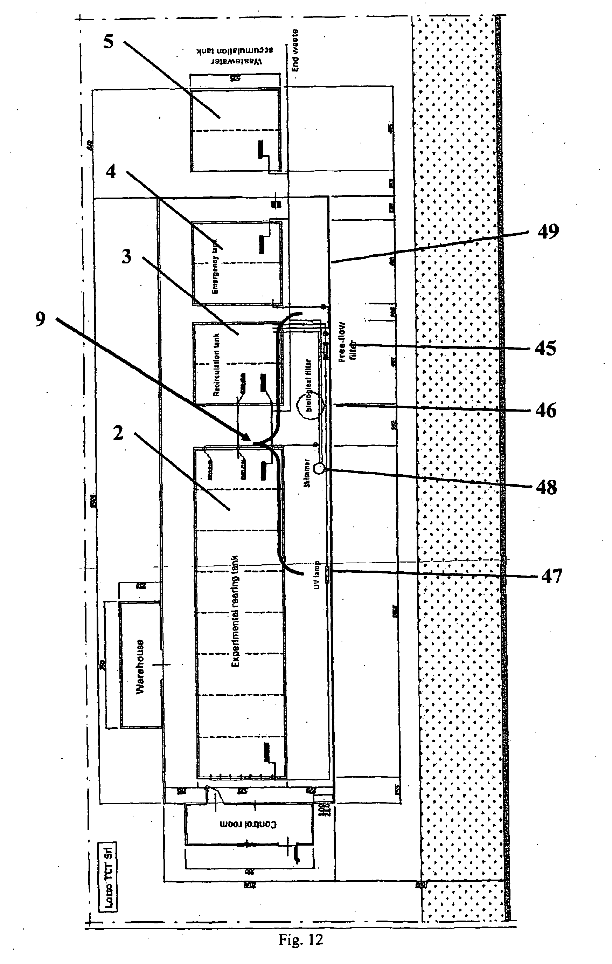

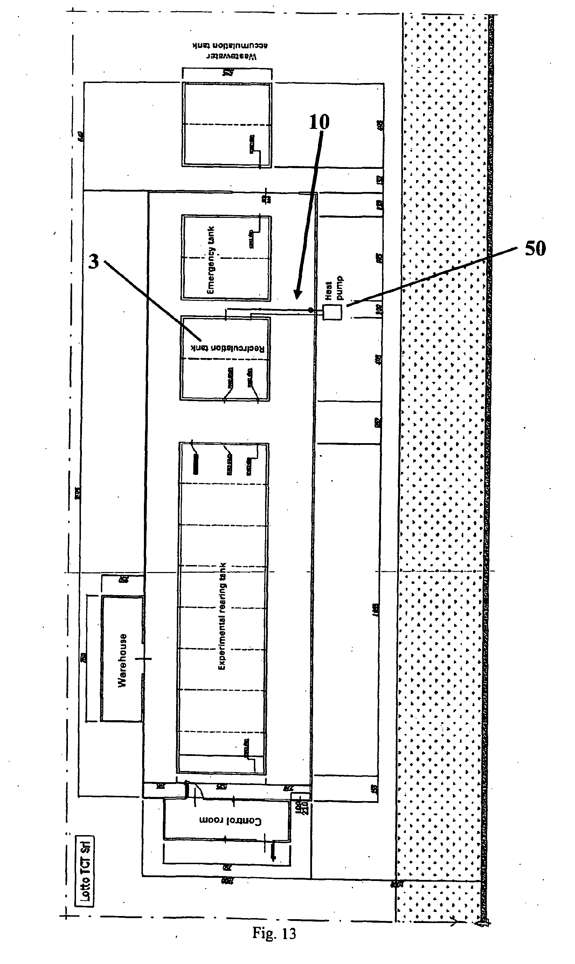

It is important to highlight that each tank consists of standard modules in a suitable number in relation to the dimension of the tank itself. In Fig. 2 the three basic modules which the various tanks are built with are illustrated: the "A"-type end module (21) which closes the left side of the tanks, the "E"-type end module (23) which closes the right side of the tanks, and the intermediate module (22) which has to be sandwiched between the first two modules. A plurality of intermediate modules (22) can be used, depending on the dimensions of the tank to be built;
■ a number of Space Increasing Structures (herein below, SISs) (6) arranged inside the tank (2), which allow increasing the rearing surface, while keeping volumes constant;
■ a turbulator (7), serving as a "natural" water oxygenation system and gas stripping system, whose task is to increase the turbulence in order to increase the water-air contact surface;
■ an oxygenation and aeration plant (8), complementary to the turbulator (7), substantially made up of (see Fig. 10) pumps (37) suctioning water from the tank (2) and pump the pressurized water back into the tank, by means of ejectors into which oxygen or air is added;
■ a depuration system (9), required given that the present invention relates to a closed circuit system based on the recirculation of the rearing wastewater; this being a microfiltration system (see Fig. 12) made up of a static self-cleaning filter (45) of the *"free-flow"* type, adapted to hold fluid-borne solid waste particles; a *skimmer* (48), adapted to separate the organic residues from the recirculation water of the tanks; a ultraviolet lamp (47) for the water sterilization, as the most efficient method to eliminate all the viruses and bacteria present; a biological filter (46) for the reduction of the residual organic matter;
■ a conditioning system (10), (see Fig. 13) provided outside the rearing premises, whose task is to guarantee the heat regulation of the plant all year round;
■ a monitoring system (11) for the rearing waters which consists (see Fig. 1) in a number of detecting probes, connected to a peripheral board (54); each board is connected, through a communication network, to a central processing unit (55), located in the control room (12), from which it is possible to perform any system reading operation, data recording, assessment of periodical trends, and remote control of the machines; In particular, the control software allows a real-time visualization of the parameters controlled in the different parts of the farm, data recording, and creation of historical charts, enabling all existing (optical, acoustic, telephone) alarms, determination of automatic and remote enabling values of valves, oxygenators, and pumps.

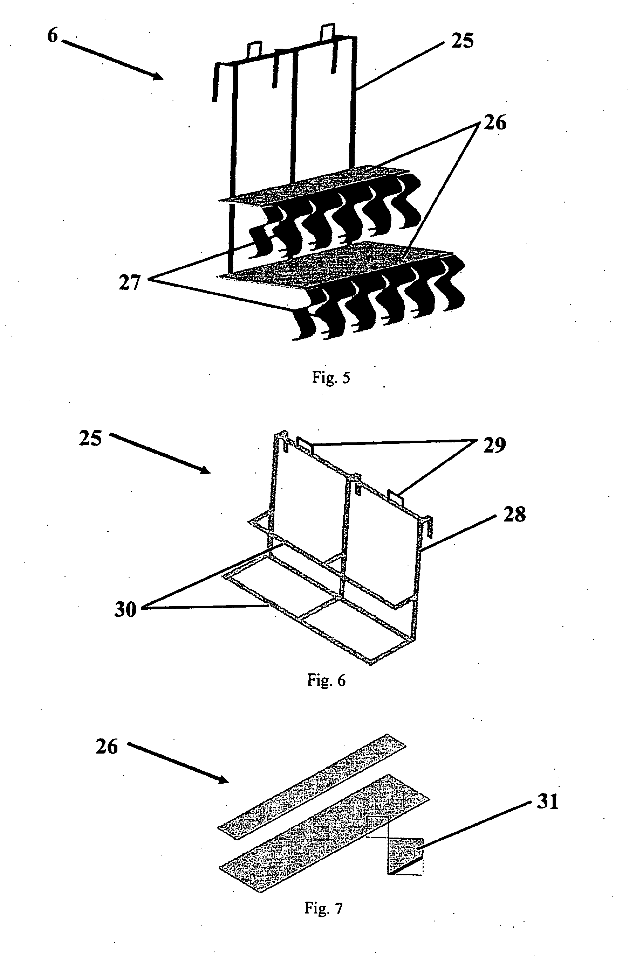

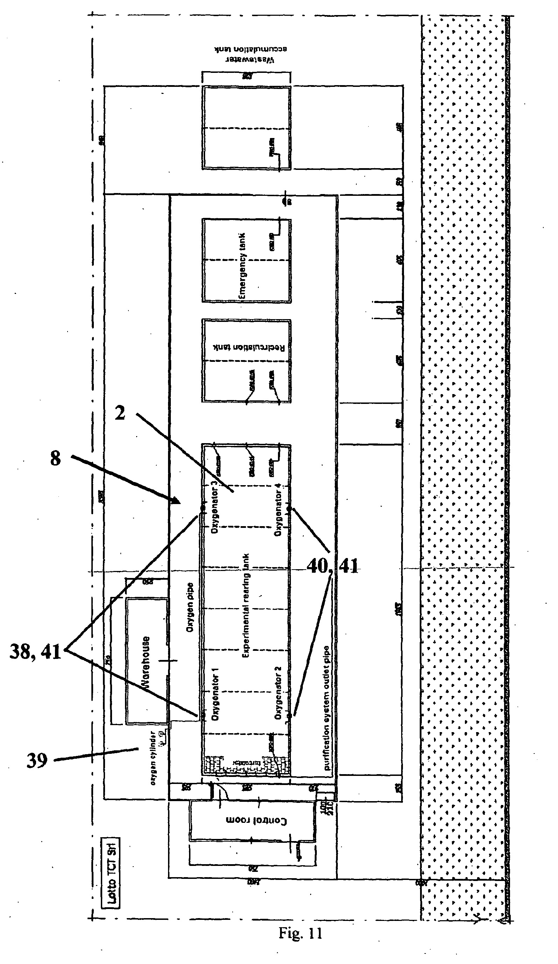

Characteristics of the plant according to the present invention shall be clearer from the following detailed description of a preferred embodiment thereof, provided for exemplifying nonlimiting purposes, with reference to the drawings, wherein:
■ Fig. 1 represents a simplified diagram of the overall plant (1), with the plurality of tanks (2, 3, 4, 5) thereof, turbulator (7), oxygenation and aeration system (8), purification system (9), conditioning system (10), and monitoring system (11) for the rearing waters located in the control room (12);
■ Fig. 2 represents the axonometric view of the three modules making up the tanks: the "A"-type end module (21) which closes the left side of the tanks, the "E"-type end module (23) which closes the right side of the tanks, and the intermediate module (22); furthermore, the detail (24) represents the joint between the modules;
■ Fig. 3 represents the sectional view of the joint (24) of the modules making up the tanks, represented by a type of male/female coupling, in which, in the upper part of the same, an interspace is left between one module and the other, 1 cm wide, in order to avoid impacts during the installation operations;
■ Fig. 4 represents the view of the formwork (15) by means of which the modules of the tanks (21, 22, 23) are obtained; a framing system with section bars (16) is provided in the upper part of the formwork , and a double array of threaded tension rods (17), connected to the formwork on both sides by means of a hinge constraint (18), is provided in a central position with respect to the length of the module;
■ Fig. 5 represents the axonometric view of the Space Increasing Structure SIS (6), made up of a metal frame (25), horizontal support surfaces (26) in lightweight, inert; plastic material, such as Polyethylene, PVC, or Plexiglas, and vertical floating substrates (27), made of suitably shaped pieces of cloth, made of non-woven fabric synthetic fibres;
■ Fig. 6 represents the axonometric view of the frame (25) of the Space Increasing Structure SIS (6), as illustrated in Fig. 5;
■ Fig. 7 represents the axonometric view of the support surfaces (26) of the Space Increasing Structure SIS (6), as illustrated in Fig. 5, including the detail of the hole (31) through which the connection of the vertical floating surfaces (27) of non-woven fabric is performed, by means of rope laces;
■ Fig. 8 represents the axonometric view of the turbulator (7), in which the various parts it is made of several are clearly illustrated: the L-shaped supports (33) for fastening against the tank, the support beams (34) consisting in rectangular steel section bars, the Plexiglas plane (35), and the corrugated plane (36);
■ Fig. 9 represents the front view of the turbulator (7), with the same parts already highlighted in Fig. 8;
■ Fig. 10 represents the simplified diagram of the oxygenation system (8) made up of pumps (37) suctioning water from the tank (2) and pumping it back into the tank, by means of ejectors into which oxygen or air is added;
■ Fig. 11 represents the layout of the oxygenation and aeration system (8), made up of four self-priming pumps (37), two of which being oxygenators (38), connected to the liquid oxygen system (39) through suitable pipes, and two of which being aerators (40) sectioning only air; all the four self-priming pumps being provided with ejectors (41), not shown in the Figure, for oxygen injection;
■ Fig. 12 represents the purification system (9), divided into two circuits: a primary circuit, drawing water from the recirculation tank (3), and a secondary circuit, drawing water directly from the rearing tank (2) and which, after the treatment, adds it into the recirculation tank (3). The primary circuit is, in turn, composed of a static self-cleaning filter (45) of the *"free flow"* type, a biological filter (46), a ultraviolet lamp (47). On the other hand, the secondary circuit is made up of a *skimmer* (48). The residual sludge produced by the purification circuit is conveyed to the wastewater collection tank (5) through the waste pipe (49) for the final disposal;
■ Fig. 13 represents the conditioning system (10), composed of a heat pump (50) provided outside the rearing premises, drawing water from the recirculation tank (3) and pumping it back into the latter, once the conditioning has been completed.

As observable from the annexed Figures, the peneid shrimp rearing plant (1) according to the present invention consists, in the preferred embodiment thereof, in:
■ a systems of tanks made up of: the rearing tank (2), where the shrimps to be reared are located, the recirculation tank (3), which is directly connected to the rearing tank (2), from which where the water to be filtered is drawn, avoiding creating turbulences inside the rearing tank (2), emergency tank (4), and finally wastewater collection tank (5), in which all the wastes produced by the system are conveyed through the various filtering systems.

Each tank was conceived in a modular manner, so as to be formed by at least two modules, the end modules (21 and 23), with the addition of a suitable number of intermediate modules (22), depending on the dimension of the tank to be made. The general module for the tank was dimensioned in such a manner to have, in plan, the maximum compatible dimensions for the simultaneous transport of two modules by a truck provided with a crane for unloading. Therefore, the maximum weight limit for the single module is 80 q. Anchor bushings (25) are provided for each module, suitably dimensioned and positioned so as to allow a proper installation of the modules and the joints (24). Said joint (24) of the modules making up the tanks (see Fig. 3) is made of a type of male/female coupling, in which, in the upper part of the same, an interspace is left between one module and the other, 1 cm wide, in order to avoid impacts during the installation operations. The modules can be joined, through the joints (24), by means of PVC waterproofing tape whose gluing is performed by applying an epoxy resin, avoiding inserting an adhesive in the same connection. In order to waterproof the entire tank, an elastic impermeable mortar shall be used, which will be laid after positioning a 4x4.5mm mesh alkali-resistant fibreglass grid on the inner surface of the tank. The mortar has to be accurately laid, so as to avoid the presence of grooves, which can become a bacterial breeding ground and accumulation of small waste material which deposit during the system operation. The almost total elimination of the grooves is achieved with the aid of an abrasive paper. Powder superplasticizer-waterproofer with high pozzolanic activity, shall be added to the concrete mix, in order to allow a good compaction of the concrete during casting, and a good waterproofing. The formwork (15) which implements the single module was dimensioned in such a manner to be made up of a single piece, in order to prevent possible raised connection surfaces from causing sealing problems to the tank. During casting, the form work is arranged in a vertical position, so that the height thereof, equivalent to 250 cm, is equal to the module length (see Fig. 2). The external part is made in three pieces: the module base as a fixed single piece, welded to a steel plate which is rigidly fastened to the floor, in order to limit the formwork strains, and the two mobile side walls of the module, fastened to the fixed part by means of bolts, in order to facilitate the shaping of the module itself. The external part of the formwork, which is moveable and made in a single piece, is connected to the fixed part through several connection points, performed by means of bolts. The inner parts of the module walls were made at various thickness, in particular, the upper part measures 10 cm and the lower one measures 13 cm, in order to facilitate the removal of the moveable part formwork during the shaping step, and so as to increase the static strength of the lower part of the wall, where the hydrostatic thrust is highest. In order to harden the form work (15), a framing system with section bars (16) was provided in the upper area thereof (see Fig. 4) and, in order to avoid strains which can jeopardise the modules (21, 22, 23) coupling, four contact points between the fixed and moveable parts were provided, connected in pairs by means of section bars fastened to the formwork by means of bolts. In order to facilitate the removal of the moveable part, in the central position with respect to the module length, a double array of threaded tension rods (17) is connected to the formwork at both sides through a hinge constraint (18).
■ a number of Space Increasing Structures (SISs) (6), arranged inside the tank (2), whose shape, position and arrangement was defined taking into account tank dimensions, management requirements, fastening modes to the load bearing structure, habits of the peneid shrimps reared, specific biological requirements of the plant, in terms of bacterial and algal activity, and of the need to keep the rearing environment clean and hygienically healthy. The SISs (6) provided in the plant according to the present invention are moveable suspended areas of a varying width (see Fig. 5), to be accommodated along the edges of the tank at various depths, made up of a metal material frame (25), by support surfaces (26) in lightweight, inert, plastic material, such as Polyethylene, PVC, or Plexiglas, and of vertical floating substrates (27) made of inert synthetic material. In particular, with reference to Fig. 6, the frame is obtained by means of stainless steel bands (28) 3 mm thick and 5 cm wide, bent in such a manner to be hung to the tank walls. Handles (29) having a 1 m distance between centres are provided on the upper part of the SISs frame in order to facilitate the hoisting and transport thereof during routine cleaning operations. In order to increase the hardness thereof, transverse bands (30) are provided, made of a material and with dimensions equivalent to the previous ones. The two planes acting as a support surface, measuring 24x200x1 cm and 50x200x1 cm respectively, are made of Plexiglas, given that the transparency of this material allows a higher visibility of all the parts of the plant. The end part of the shelves is suitably drilled (31) so as to allow the connection of the floating vertical surfaces (27), consisting in pieces of cloth suitably shaped made of non-woven fabric synthetic fibres, by means of rope laces.
■ possibly a plastic cover, arranged at least 40 cm above the water level, in such a manner to limit the evaporation phenomena which, beside representing a considerable loss of the cultural medium, and an agent aggressive against metal structures, are detrimental due to the transport effect which the condensation drops may acquire by dripping back into the tank, thus polluting the system both chemically and biologically. The distance from water level is determinant in order to ensure gas exchanges from and to the rearing medium (inflowing oxygen and outflowing ammonia), and in order to minimize the growth of bacterial colonies on the sheet itself.
■ a turbolator (7), made up of a corrugated surface (36) made of a metal sheet or polymer material, on which the water to be oxygenated, coming from a delivery pipe, flows constantly and due to the presence of transverse lamellas, it acquires a mounting turbulence which allows its enrichment in oxygen. Fastening the turbulator (7) to the tank occurs by means of the L-shaped structures (33), slanting at 3° to follow its shape, suitably bolted against the inner walls by means of holes; beams (34) made of rectangular steel sections are fastened onto these supports. In the preferred embodiment, the turbulator (7) is made up of: a plane (35) measuring 475x130 cm, made up of two Plexiglas sheets, 1 cm thick and whose length reaches half the plane, and a polycarbonate corrugated plane (36).
■ an oxygenation and aeration system (8), operated automatically only when the central monitoring system (11) delivers the consent signal, assessing the amount of the oxygen dissolved in real time. The oxygen and aeration system is made up (see Fig. 11) of: four self-priming pumps (37), two of which are real oxygenators (38), connected through suitable pipes to the liquid oxygenation system (39), which can be disconnected in case the air, within the water in the rearing tank (2) is sufficient, allowing reduction of the plant running costs, and two aerators (40) which suction only air: four injectors (41) with a special shape, complete with air or oxygen injection nozzle. The aeration system can be completed with the introduction of a blower and by the relative gaseous air system which allows ensuring good operation levels of the oxygen dissolved and a proper movement of the waters, as an alternative to running the oxygenators, allowing, with respect to the latter, saving a fair amount of energy and reducing the turbulent water motions. At the beginning of the rearing step, when the tank (2) almost exclusively contains post-larvae, the oxygenators, harmful to that kind of population, can be advantageously replaced by a porous stones aeration system.
■ a purification system (9), divided into two circuits (see Fig. 12): a primary one, which draws water from the recirculation tank (3), and a secondary one, which draws water directly from the rearing tank (2) and, pumps it back into the recirculation tank (3) after the treatment. Being a closed circuit plant, the problem regarding the reduction of the concentration of pollutants and toxic agents, such as ammoniac nitrogen, ammonia and, under particular water temperature and pH conditions, nitrite ion, generated by the biological cycle of the crustaceans, represents one of the key factors regarding the management of the system: as a matter of fact, the presence of such substances is an ideal indicator of the quality conditions of the water and their accumulation represents a serious hazard for the survival of the reared animals. The purification system (9) provided is a biological filtration system, through the nitrification process, performed by two bacterial strains whose growth and development is facilitated by providing an aerobic environment generated by a high surface/volume ratio. In detail, the main circuit of the purification system (9) is made up of :
   • a static self-cleaning filter (45) of the free-flow type, adapted to withhold water-borne solid waste on the pipes of the system. The static self-cleaning filter is made up of an external body, a filtering element and a waste discharge valve, entirely made of plastic materials, resistant against acids present in the rearing environment. The filter functions using a line pressure of at least 2 bars and operates constantly, even during the self-cleaning step, regulated by the automatic monitoring system by means of a PLC, without the presence of a supervisor.
   • a biological filter (46) through which the residue organic substance is reduced; in particular, being a dripping filter which operates at a pressure of 2.5 bars, allowing to increase the contact surface through polymer elements, such as polyester resin, reinforced with fibre glass. This filter is highly efficient with high ammoniac nitrogen loads present in the rearing environment and in the presence of suitable oxygenation, it enhances the development of biofilms.
   **•** a ultraviolet lamp (47) which sterilises and eliminate bacteria from the water, penetrating through the cellular wall of micro-organisms, eliminating 99% of the bacterial flora, without any addition of chemical products, without altering the water and requiting low maintenance.

On the other hand, the secondary circuit is made up of a skimmer (48) which draws water directly from the rearing tank (2), at the free surface and separates the floating organic residues. The skimmer operates using extremely small air bubbles insufflated from the bottom of the vat, which, mixed with the water to be purified, form a foam and capture due to the effect of the surface tension, rising, a thin film of organic material; when the bubbles reach the top of the vat they blow releasing the organic material which is evacuated.

Under operating conditions, it is provided for that 2/3 of the water supplied into the main purification circuit must come from the skimmer (48) and a 1/3 from the overflow pipe which connects the rearing tank (2) to the recirculation tank (3).
■ a conditioning system (10) (see Fig. 13), required to guarantee heat regulation of the rearing waters all year round, given that the heat factor is essential for the growth of the reared organisms. The conditioning system is made up of a heat pump (50) provided outside the rearing premises, which draws water from the recirculation tank (3), keeps its temperature between 18 and 29°C, deemed a favourable range for the growth of peneid shrimps, and pumps it back into the tank (3).
■ a monitoring system for the rearing waters (11) which consists in (see Fig. 1):
   - a given number of probes for detecting parameters essential for the ecosystem of the farm, such as temperature, the oxygen present in the rearing water and the pH of the water, connected to a central control unit (54). Given the need to keep the temperature value constant, installation of two temperature detecting probes (51) in two points of the water cycle, as shown in Fig. 1, were deemed necessary. Installed in the same zones were also two oxygen concentration detecting probes (52) which operate constantly monitoring whether the values detected in the water are comprised within the range set in the central control unit and operating, suitably and automatically the oxygenation apparatus, should additional oxygen be required; in case of mismatch the software enables an alarm signal. Given that the plant in question is a closed circuit plant, an increase of the concentration of the organic substance alongside the decrease of the pH value, shall be interpreted as an increased activity of the nitrifying bacteria, bound to destroy the shrimp food in a short period of time. It can be presumably argued that the pH value does not vary in the tank, hence installation of only one probe (53) which constantly detects the values transmitting them to central control unit (54) is provided for; should the values exceed the preset threshold, an automatic alarm allows the operator to intervene both manually and through the computer (55), adding, for example, a carbonate hydrogen sodium solution.
   - a video monitoring system used both for scientific and security purposes.
   - a central control unit (54) which can be configured automatically both by the computer (55) and the control panel of the central control unit itself. The control system is provided with a mechanism which allows, in case of failure of any of the components of the system, self-configuration in emergency state, in such a manner to guarantee the survival of the biological material in the tank up to the manual restoration intervention.
   - a central computer (55) with a software for the control of the plant in question, suitably developed in a Windows XP environment, which is provided with the following functions: constant display of the temperature and the pH value of the rearing water and the concentration of the oxygen dissolved in the rearing tank (2); continuous storage of the calculated values in a database, with the possibility to display historical diagrams; management of the alarms with automatic solution of the problems; management of the aerators (40) and oxygenators (38).

## Claims

1. Plant for production of peneid shrimps or any other aquatic species comprising at least a rearing tank (2) and a recirculation tank (3) or a system of tanks, at least one aeration and oxygenation system (8), at least one purification system (9), at least one conditioning system (10) and a monitoring system (11) for the rearing waters and **characterized by** at least one space increasing structure (6), arranged inside said tank (2) and at least one turbulator (7) for natural oxygenation and gas stripping of the plant.

2. Plant according to claim 1 **characterized in that** said system of tanks comprises a rearing tank (2), a recirculation tank (3), directly connected to the rearing tank (2), an emergency tank (4) and a discharge water accumulation tank (5).

3. Plant according to claim 2, **characterized in that** each tank is modular, in such a manner to be made up of a minimum of two modules, the end ones (21 and 23), with the addition of an appropriate number of intermediate modules (22).

4. Plant according to one of the preceding claims, **characterized by** a plurality of space increasing structures (6), arranged inside the tank (2), which allow to increase the rearing surface.

5. Plant according to claim 4, wherein said space increasing structures (6) are moveable suspended areas with a varying width to accommodate along the edges of the tank at various depths, made of a framework of metal material (25), support surfaces (26) made of inert, plastic and light material and of vertical floating substrates (27) made of inert synthetic material.

6. Plant according to one of the preceding claims further **characterized by** a plastic cover, arranged above the water level, in such a manner to limit the evaporation phenomena.

7. Plant according to one of the preceding claims, **characterized by** a turbulator (7), comprising at least one corrugated surface (36) made of a metal sheet or polymer material.

8. Plant according to claim 7, **characterized in that** said turbulator (7) is made up of a plane (35) made up of two Plexiglas sheets and a polycarbonate corrugated plane (36).

9. plant according to one of the preceding claims, **characterized by** an oxygenation and aeration system (8), comprising at least one pump (37) which draws water from the tank (2) and pumps it back into it, under pressure, and at least one injector through which oxygen or air are added into the system.

10. Plant according to claim 9, wherein said aeration system (8) comprises a blower and the relative gaseous air circuit.

11. Plant according to claim 10, wherein said aeration system comprises a porous stones aeration system.

12. Plant according to one of the preceding claims, **characterized by** a microfiltration purification system (9) comprising a primary circuit, which draws water from the recirculation tank (3), and a secondary one, which draws water directly from the rearing tank (2) and, and pumps it back into the recirculation tank after treatment.

13. Plant according to claim 12, wherein said primary circuit comprises a static self-cleaning filter (45) of the free-flow type, a biological filter (46) for the reduction of the residue organic substance and a ultraviolet lamp (47) for sterilizing the water.

14. Plant according to one of the preceding claims, **characterized by** a conditioning system (10), comprising at least one heat pump (50), provided outside the rearing premises, which draws water from the recirculation tank (3), keeps the temperature between 18 and 29°C and pumps it back into the tank (3).

15. Plant according to one of the preceding claims **characterized by** a monitoring system for the rearing waters (11) comprising a plurality of detecting probes, at least one central control unit, at least one central computer (55) and a control software.

## Patentansprüche

1. Anlage zur Produktion von Geißelgarnelen oder beliebigen anderen Wassertierarten, umfassend mindestens einen Zuchttank (2) und einen Umwälztank (3) oder ein Tanksystem, mindestens ein Belüftungs- und Begasungssystem (8), mindestens ein Klärsystem (9), mindestens ein Konditionierungssystem (10) und ein Überwachungssystem (11) für das Zuchtwasser und **gekennzeichnet durch** mindestens eine im Tank (2) angeordnete Raumvergrößerungskonstruktion (6) und mindestens einen Turbulator (7) für die natürliche Begasung und Entgasung der Anlage.

2. Anlage nach Anspruch 1, **dadurch gekennzeichnet, dass** das Tanksystem einen Zuchttank (2), einen direkt mit dem Zuchttank (2) verbundenen Umwälztank (3), einen Nottank (4) und einen Abwassersammeitank (5) umfasst.

3. Anlage nach Anspruch 2, **dadurch gekennzeichnet, dass** jeder Tank derart modular aufgebaut ist, dass er aus mindestens zwei Modulen, den Endmodulen (21 und 23), und zusätzlich einer geeigneten Anzahl von Zwischenmodulen (22) besteht,

4. Anlage nach einem der vorherigen Ansprüche, **gekennzeichnet durch** eine Vielzahl von im Tank (2) angeordneten Raumvergrößerungskonstruktionen (6), die das Vergrößern der Zuchtfläche ermöglichen.

5. Anlage nach Anspruch 4, bei der die Raumvergrößerungskonstruktionen (6) beweglich aufgehängte Flächen mit veränderlicher Breite für die Unterbringung längs der Ränder des Tanks in unterschiedlichen Tiefen sind, die aus einem Rahmen aus Metallmaterial (25), Stützflächen (26) aus inertem, nachgiebigem und leichtem Material und senkrechten Schwimmträgern (27) aus inertem Kunststoff bestehen.

6. Anlage nach einem der vorherigen Ansprüche, die ferner durch eine Kunststoffabdeckung **gekennzeichnet** ist, die derart über dem Wasserspiegel angeordnet ist, das sie die Verdampfungserscheintutgen begrenzt.

7. Anlage nach einem der vorherigen Anspruch, die durch einen Turbulator (7) **gekennzeichnet** ist, der mindestens eine gewellte Oberfläche (36) umfasst, die aus einem Metallblech oder Polymermaterial besteht.

8. Anlage nach Anspruch 7, **dadurch gekennzeichnet, dass** der Turbulator (7) aus einer Fläche (35) besteht, die aus zwei Plexiglasplatten und einer gewellten Polycarbonatfläche (36) besteht.

9. Anlage nach einem der vorherigen Ansprüche, die durch ein Begasung- und Entlüftungssystem (8) **gekennzeichnet** ist, das mindestens eine Pumpe (37), die Wasser aus dem Tank (2) absaugt und es unter Druck in ihn zurück pumpt, und mindestens einen Injektor umfasst, über den dem System Sauerstoff oder Luft zugeführt wird.

10. Anlage nach Anspruch 9, bei der das Belüftungssystem (8) ein Gebläse und den zugehörigen Kreislauf gasförmiger Luft umfasst.

11. Anlage nach Anspruch 10, bei der das Belüftungssystem ein Belüftungssystem mit porösem Gestein umfasst.

12. Anlage nach einem der vorherigen Ansprüche, die durch ein Mikrofiltrationsklärsystem (9) **gekennzeichnet** ist, das einen Primärkreislauf, der Wasser aus dem Umwälztank (3) abzapft, und einen Sekundärkreislauf umfaßt, der direkt aus dem Zuchttank (2) Wasser abzapft und es nach der Behandlung zurück in den Umwälztank pumpt.

13. Anlage nach Anspruch 12, bei welcher der Primärkreislauf ein statisches selbstreinigendes Filter (45) des Free-Flow-Typs, ein biologisches Filter (46) zum Verringern der rückständigen organischen Substanz und eine Ultraviolett-Lampe (47) zum Entkeimen des Wassers umfasst.

14. Anlage nach einem der vorherigen Ansprüche, die durch ein Konditionierungssystem (10) **gekennzeichnet** ist, das mindestens eine außerhalb des Zuchtgeländes vorgesehene Wärmepumpe (50) umfasst, die Wasser aus dem Umwälztank (3) abzapft, die Temperatur auf einem Wert zwischen 18 und 29°C hält und es zurück in den Tank (3) pumpt.

15. Anlage nach einem der vorherigen Ansprüche, die durch ein Überwachungssystem für das Zuchtwasser (11) **gekennzeichnet** ist, das eine Vielzahl von detektierenden Sonden, mindestens eine Hauptkontrolleinheit, mindestens einen Hauptrechner (55) und eine Steuersoftware umfasst.

## Revendications

1. Installation pour la production de crevettes pénéides ou n'importe quelle autre espèces aquatique, comprenant au moins un réservoir d'élevage (2) et un réservoir de recyclage (3) ou un système de réservoirs, au moins une structure d'aération et d'oxygénation (8), au moins un système de purification (9), au moins un système de conditionnement (10) et un système de surveillance (11) pour les eaux d'élevage et **caractérisée par** au moins une structure d'augmentation d'espace (6), disposée à l'intérieur dudit réservoir (2) et au moins un agitateur (7) pour une oxygénation naturelle et un dégazage de l'installation.

2. Installation selon la revendication 1, **caractérisée en ce que** ledit système de réservoirs comprend un réservoir d'élevage (2), un réservoir de recyclage (3), directement relié au réservoir d'élevage (2), un réservoir de secours (4) et un réservoir d'accumulation d'eau de décharge (5).

3. Installation selon la revendication 2, **caractérisée en ce que** chaque réservoir est modulaire, de manière à être constitué par un minimum de deux modules, ceux d'extrémité (21 et 23), avec l'ajout d'un nombre approprié de modules intermédiaires (22).

4. Installation selon l'une des revendications précédentes, **caractérisée par** une pluralité de structures d'augmentation d'espace (6), agencées à l'intérieur du réservoir (2), qui permettent d'augmenter la surface d'élevage.

5. Installation selon la revendication 4, dans laquelle lesdites structures d'augmentation d'espace (6) sont des zones suspendues mobiles avec une largeur variable pour s'adapter le long des bords du réservoir à différentes profondeurs, constituées par un châssis de matériau métallique (25), des surfaces de support (26) réalisées en matière plastique inerte et légère et des supports flottants verticaux (27) réalisés en matière synthétique inerte.

6. Installation selon l'une des revendications précédentes, **caractérisée en outre par** une couverture en plastique, agencée au-dessus du niveau de l'eau, de manière à limiter le
phénomène d'évaporation.

7. Installation selon l'une des revendications précédentes, **caractérisée par** un agitateur (7), comprenant au moins une surface ondulée (36) constituée par une tôle métallique ou un matériau polymère.

8. Installation selon la revendication 7, **caractérisée en ce que** ledit agitateur (7) est constitué par un plan (35) composé de deux feuilles de Plexiglas et un plan ondulé en polycarbonate (36).

9. Installation selon l'une des revendications précédentes, **caractérisée par** un système d'oxygénation et d'aération (8), comprenant au moins une pompe (37) qui soutire de l'eau du réservoir (2) et la pompe en retour dans celui-ci sous pression, et au moins un injecteur à travers lequel de l'oxygène ou de l'air est ajouté dans le système.

10. Installation selon la revendication 9, dans laquelle ledit système d'aération (8) comprend une soufflante et le circuit d'air gazeux correspondant.

11. Installation selon la revendication 10, dans laquelle ledit système d'aération comprend un système d'aération à pierres poreuses,

12. Installation selon l'une des revendications précédentes, **caractérisée par** un système de purification par microfiltration (9) comprenant un circuit principal, qui soutire de l'eau dans le réservoir de recyclage (3) et un circuit auxiliaire, qui soutire de l'eau directement dans le réservoir d'élevage (2) et la pompe en retour dans le réservoir de recyclage après traitement.

13. Installation selon la revendication 12, dans laquelle ledit circuit principal comprend un filtre statique autonettoyant (45) du type sans flux, un filtre biologique (46) pour la réduction de la substance organique résiduelle et une lampe à ultraviolet (47) pour stériliser l'eau.

14. Installation selon l'une des revendications précédentes, **caractérisée par** un système de conditionnement (10), comprenant au moins une pompe à chaleur (50), prédisposée à l'extérieur de l'installation d'élevage, qui soutire de l'eau dans le réservoir de recyclage (3), maintient la température entre 18 et 29°C et la pompe en retour dans le réservoir (3).

15. Installation selon l'une des revendications précédentes, **caractérisée par** un système de monitorage pour les eaux d'élevage (11), comprenant une pluralité de sondes de détection, au moins une unité centrale de commande, au moins un ordinateur central (55) et un logiciel de commande.
